# EUROPEAN PATENT SPECIFICATION

(11) **EP 1 327 350 B1**
(45) Date of publication and mention of the grant of the patent: **31.05.2006**
(21) Application number: 01975124.7
(22) Date of filing: 10.10.2001
(51) Int. Cl.: H04M 15/10, H04Q 7/38

(54) **PAYMENT SERVICE FOR TRANSMISSION OF INFORMATION**
BEZAHLUNGSDIENST FÜR DIE ÜBERTRAGUNG VON INFORMATIONEN
SERVICE DE PAIEMENT POUR TRANSMISSION D'INFORMATIONS

(30) Priority: 13.10.2000 SE 0003708
(43) Date of publication of application: 16.07.2003
(73) Proprietor: Telia AB (publ), 123 86 Farsta (SE)
(72) Inventor: ERIKSSON, Jonas, S-652 22 Karlstad (SE)
(74) Representative: Hopfgarten, Nils
(86) International application number: PCT/SE2001/002199
(87) International publication number: WO 2002/032104

(56) References cited:
- WO-A1-00/44130
- WO-A1-99/41922

## Description

### Technical field of the invention

The present invention relates to a method and a system for providing a third party connected to a server on a packet data network, such as the Internet, with a service of transferring information originating from the third party to a mobile user in a wireless communication network free of charge for the mobile user and at the expense of the third party.

### Technical background

Today, more and more mobile data services make use of the so called "push"-technology. Typically, to push data to a user means that a system or network automatically provides the user with some kind of information. Often this information is of the kind which is desired by the user, and therefore defined by a set of criteria in order to meet the desires of the user. However, in this application, pushing of data relates to any information, such as desired or non-desired information or advertising, that is transferred to a user on the initiative of a transmitting party.

The push-technology is today perhaps most widely used for pushing information to a stationary user, such as a user operating a computer connected to the Internet. However, with the rapid growth of mobile communications, in combination with the flexibility of being able to be reached by pushed information at any location, the push-technology is becoming more and more interesting for users being connected to a wireless communication network. For example, the push technology can be realised by way of pushing short messages, e.g. using the SMS service (Short Message Service) provided by a GSM network (Global System for Mobile Communication), to a mobile user.

The technology enhancements of the wireless communication networks further encourage the use of push-technology within these networks. The evolution of higher bandwidth and/or packet data transmissions to the wireless terminals of the mobile users facilitate communication with other data networks, such as the Internet. Examples of wireless communication network with higher bandwidths and with support for packet data transfer to the wireless terminal of a mobile user are GSM networks providing GPRS services (General Packet Radio Service), or the forthcoming new generation of wireless communication networks known as UMTS (Universal Mobile Telephony Standard) or 3G networks.

When a packet switched connection, rather than a circuit switched connection, is used for transferring data to/from a mobile user terminal, which for example is the case when introducing GPRS in a GSM system, it will be possible for a mobile user to be constantly connected not only to the wireless network, but also to the Internet or some other packet data network via the wireless network and an interconnecting gateway. As the mobile user is constantly connected, the user will be charged for the actual bandwidth he uses. This means that the mobile user will be charged for each packet transmitted or received by the user, rather than for the time duration of the data transfer.

WO 00 44130 deals with the provision of services on an IP based network. These services are based on an existing user authentication functionality, applied in a cellular radio communications network. The services are to be utilized by servers on the Internet, e.g. servers of content providers that want to verify the identity of a user, or a customer accessing the server, for charging purposes. Subscription information stored on an IC card of a user is verified in a gateway node connected to the IP based network and to the cellular radio communications network.

WO 99 41922 describes a method for broadcast transmission of SVMs by GPRS in a digital mobile telephone system. A speech encoded SVM can be transmitted to one or more receivers and is decoded and played directly into the mobile terminal. The method is primarily intended for broadcasting traffic information and advertisements.

One drawback of pushing, or transferring, information as packet data to a wireless terminal of a mobile user is, thus, that the user will be charged by the operator of the wireless network for the number data packets received. In many cases however, it may be in the interest of the originator of the information, if the information could be transferred at the expense of the originator and free of charge for the receiving mobile user. This would not only be relevant when it comes to advertising, but in any situation where the originator has an interest in that the mobile user has knowledge of the information transferred.

Thus, it would be desired to be able to charge an information originator for the data packets transmitted to a mobile user. However, when the information originates from a packet data network which is interconnected with the wireless communication network, the originator may be any party having access to the packet data network. Thus, a drawback is that the originator does not need to have some kind of established relationship with the operator of the mobile communication network, or any other operator of a mobile network, which means that there is no mechanism that can be used by the operator for charging all possible originators on the packet data network for the packet data transmission to the mobile user.

### Summary of the invention

The object of the present invention is to eliminate at least one of the above mentioned drawbacks.

Another object is to enable any information content provider to transfer, or push, information to a mobile user at own expense for the information provider, without the need for some kind of direct or indirect relationship between the operator, with which the mobile user has his subscription, and the information provider.

According to the present invention, these objects are achieved by a method and a system having the features as defined in claims 1 and 14 respectively.

The present invention is based on the idea that an e-commerce site administrates the charging of any information content provider on a packet data network that wishes to transfer packet data to a mobile user. The operator of the wireless network is informed by the e-commerce site of the administration procedures before transmitting the information, received from the content provider via a packet data network, to a mobile user free of charge for the mobile user.

Thus, an operator of the wireless network and the gateway node can be confident in that the e-commerce site, or e-commerce server application, already has charged the originator of the information for the data transmission to the mobile user, or, that a charging procedure has been initialised by the e-commerce site for completion after the packet data transmission to the mobile user is completed.

Hence, the present invention enables an operator of a wireless communication network to charge a third party for the service of transferring information, originating from the third party, to a mobile user having a subscription with the operator. This means that the invention provides a mechanism, or system, with which any content provider can transfer information to a mobile user at the content provider's own expense. The content provider, or third party, does not need to have, or to establish, some kind of relationship with the operator of the wireless network, all he needs to do is to adopt to the payment procedures defined by the e-commerce site.

### Brief description of the drawings

Further features and advantages of the invention will become more readily understood from the following detailed description of specific embodiments of the invention when taken in conjunction with the accompanying drawing.

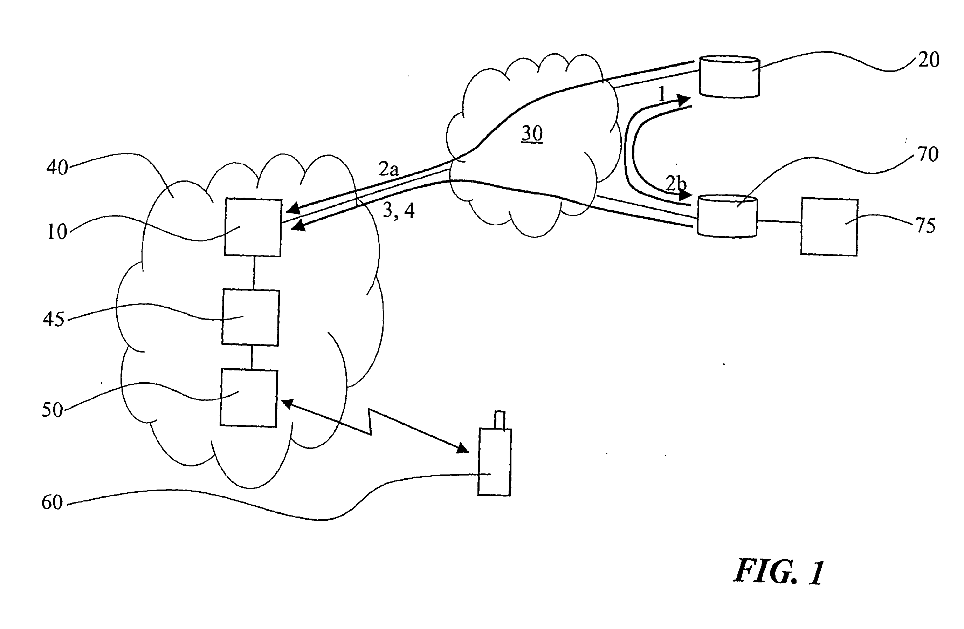

In the drawing the sole figure, Fig.1, is a block diagram illustrating an exemplifying embodiment of the invention, both with respect to its operation, as well as with respect to its overall system environment.

### Detailed description of preferred embodiments

With reference to Fig.1 an exemplifying embodiment of the invention will now be described. The invention is here illustrated in an exemplifying system environment. In Fig. 1, a gateway node 10 and a server 20 of an e-commerce site are both connected to a packet data network 30, here exemplified with the Internet. The gateway node 10 is further connected to a wireless communication network 40, here exemplified by a GSM network which has been arranged to include a GPRS service. The Base Station System 50 of the GSM network is explicitly indicated, which base station system communicates over the air with a wireless terminal 60 of a mobile user having a subscription with the operator of the GSM network 40. Connected to the Internet 30 is furthermore a third party server 70. The third party server, and thus its users 75 being provided with the service of being able to transfer packet data to the wireless terminal 60, free of charge for the subscription used by the terminal and at the expense of the user/third party 75.

Thus, in this described embodiment, a GSM network is exploited for the information transfer between the gateway node 10 and the a wireless terminal 60. The architecture and operation of a GSM Network is well known to persons skilled in the art, and, since it is of no relevance to the present invention, will not be further described herein. The packet data transferring capabilities of the GSM network is provided by the General Packet Radio Service (GPRS). GPRS is a standardisation from the European Telecommunications Standard Institute (ETSI) on packet data in GSM systems.

Also the GPRS standardisation is well known to a person skilled in the art and will not be elaborated on in this application. However, some of the its most basic features will be mentioned. A GSM system which includes a GPRS service for handling packet data traffic is equipped with a Serving GPRS Support Node (SGSN) 45 and a Gateway GPRS Support Node (GGSN) 10. The SGSN 45 is the node within the GSM infrastructure that sends and receives packet data to and from the wireless terminal via the Base Station System 50. The SGSN also transfers packets between the GPRS terminals, i.e. the wireless terminal 60, and the GGSN 10. Furthermore, it handles PDP contexts (Packet Data Protocol) for connections with any server in any external packet data network, such as with server 70 connected to the Internet 30. The GGSN 10, which is connected to the SGSN 45, is the gateway of the GSM/GPRS system to external packet data networks and routes packets between the SGSN 45 and an external packet data network, e.g. the Internet 30.

Thus, from the above description it is clear that in this embodiment, the gateway node of the present invention and the GGSN node of the GSM network is one and the same node. However, the gateway node of the present invention could alternatively be a node interconnecting the GGSN node with the external packet data network.

The operation of the overall system in Fig. 1, and its included embodiment of the present invention, will now be described. The description of the operation is made step by step with reference to the numbered arrows of Fig. 1.

In step 1, a user 75 of the third party server 70 (which user hereinafter is called third party) transmits a request over the Internet 30 to the e-commerce site server 20, thereby requesting the e-commerce site for permission to use an information transfer payment service, or push data payment service, which is administrated by the e-commerce site. Prior to making such a request, measures must have been taken so that the e-commerce site can charge the third party 75, for example via an account that the third party 75 has at the e-commerce site, a third party's external account in a bank, via a pre-registered or transferred third party's credit card number, or via any other state of the art mechanism that can be employed by the e-commerce site for charging a user. The charged amount will be transferred to an account that the operator of the gateway node 10 has at the e-commerce site 20, or to an operator's external account in a bank. Furthermore, before effectuating the request, it is preferred that the e-commerce site use some kind of state of the art authentication procedure for identifying the third party. It should be noted that the e-commerce site employed by the present invention is a general and open e-commerce site which is adapted for use in connection with the invention.

According to the invention, the third party 75 may choose from different charging schemes, or the e-commerce site may be configured to use one of a number of charging schemes. Examples of such schemes, called a), b) and c), are briefly described below.
a) A first charging scheme is based on that the third party 75 in the request to the e-commerce site 20 indicates a number of data bytes or data packets, or some equivalent measure of the information amount, that he wishes to transfer to a wireless terminal 60. The e-commerce site will then immediately charge the third party 75 for the number of data bytes or packets and transfer a corresponding amount of money to the operator of the gateway node 10. If the request of information transfer relates to IP telephony, the third party could in this scheme alternatively be charged for a time duration indicated in the request, e.g. for a pre-defined number of minutes of a IP telephony call to be terminated in a wireless terminal 60.
b) A second charging scheme uses a running account. In this scheme the gateway node 10 will, simultaneously with an ongoing information transfer to a wireless terminal, send charging messages back to the e-commerce site 20 on a regular basis. Each such charging message indicates to the e-commerce site 20 that the third party 75 should be charged a given small amount and each message is sent from the gateway node as soon as a certain number of bytes has been transmitted, or a certain amount of time has elapsed.
c) In a third scheme, the e-commerce site 20 simply identifies the third party. The gateway node 10 will at a later stage measure the total number of bytes or packets transferred to the wireless terminal, or, in case of IP telephony which terminates in the wireless terminal, measures the total time duration for the IP telephony call. When the information transfer has ended, the gateway node 10 sends a charging message to the e-commerce site 20 indicating the total amount that the third party 75 should be charged.

Continuing now with the step by step operation, the e-commerce site will in step 2, after having received the above request and authenticated the third party 75, initiate one of the charging schemes described above. The e-commerce site will also generate a pair of keys, either symmetrical keys or asymmetrical keys. The use of encryption keys and their associated algorithms should be well known to a person skilled in the art. According to the invention, a pair of keys is generated for each transaction using the payment service, i.e. for each third party request received by the e-commerce site. Regardless of whether these keys are symmetrical or asymmetrical, they will be invalid after the information has been transferred and the third party has been charged for the transmission.

Step 2 further includes transmission of the generated keys, preferably over secure or encrypted connections, over the Internet 30 to the third party 75 and the gateway node 10. A first key of the pair of keys is transmitted, 2a, to the gateway node 10. The reception of a key by the gateway node 10 will indicate to the node that someone, i.e. the third party, has acquired the right to transfer information to the wireless terminal 60 free of charge for the subscription associated therewith. As discussed above, the right is either acquired by pre-payment or via an identification of the third party for later payment during an ongoing, or after a completed, transmission. If the right has been acquired by pre-payment, the message from the e-commerce site to the gateway node that includes the first key will further include a measure of the amount of information, e.g. in data bytes or transferring time, for which the third party has paid. As mentioned, step 2 furthermore includes transmission, 2b, of the second key of the pair of keys to the third party. If asymmetrical keys are used, it is the public key that is transmitted to the third party 75 and the private key to the gateway node 10. The transmission, 2a and 2b, of the generated keys, the first key to the gateway node and the second key to the third party, is preferably done over encrypted and/or secure connections.

In step 3 the third party 75 transmits a request to the gateway node, i.e. to the GGSN of the GSM network, requesting the gateway/GGSN node to allow information transfer to the wireless terminal free of charge for the associated subscription. This request from the third party includes the second key previously transferred from the e-commerce site 20 to the third party 75. The gateway node will then compare the received second key with the first key previously received from the e-commerce site 20 and stored by the gateway node. If a match is found, the gateway node 10 will accept transmission of the information received from the third party 75 to the wireless terminal 60 free of charge for the associated subscriber, i.e. the mobile user.

In step 4, the gateway node 10 receives information in the form of packet data from the third party 75 for further transmission to the wireless terminal 60. The information will be transferred as packets over the GSM network 40 and its provided GPRS service. Preferably, the gateway/GGSN node is configured to use the Wireless Application Protocol for transmission of application data, and the GPRS service as a bearer for the transmission. If the information transfer was pre-paid, the gateway node 10 will stop relaying information to the wireless terminal 60 after a certain number of data bytes, or a certain time period in case of IP telephony, corresponding to the amount of information for which the third party 75 made a payment at the e-commerce site 20.

If, in step 2a, the message with the first key to the gateway node 10 includes information that the third party 75 has been identified and requested to be charged during ongoing transmission, the gateway node 10 will count the number of data bytes, or data packets, or time duration of the transmission. Simultaneously with the transmission to the wireless terminal, the gateway node 10 will continuously transmit charging messages to the e-commerce site 20. Each such charging message represents a small amount of money which should be charged the third party 75. This kind of charging is similar to the continuous ongoing charging by a pay phone during a conversation.

Alternatively, if the message including the first key indicates to the gateway node 10 that the third party 75 is to be charged after the transmission to the wireless terminal 60 has been completed, the gateway node 10 will count the number of data bytes/packets or time duration of transmission. After the transmission is completed, the gateway node 10 will generate and transmit one message to the e-commerce site 20 with information regarding a total amount that the third party 75 should be charged. The total amount corresponding to the amount of information, measured in bytes/packets or transferring time, that has been received from the third party 75 by the gateway node 10 and transmitted to the wireless terminal 60.

It will be appreciated that the information received by the gateway node 10 from the third party 75 in an alternative embodiment can be transmitted to the wireless terminal 60 as SMS messages by utilising the Short Message Service provided by the GSM network 40. The modifications of the above described embodiments for adapting the transmission in step 5 to employ SMS messages will be apparent for a person skilled in the art.

## Claims

1. A method implemented by a gateway node (10) for transferring of information to a mobile user (60) in a wireless communication network (40) free of charge for the mobile user, said information originating from a third party (75) via a packet data network (30), such as the Internet, said gateway node being operatively connected to the packet data network and to the wireless communication network, **characterized by** the steps of:
receiving, from an e-commerce site server (20) via the packet data network (30), a first key (2a) indicating that someone has acquired the right to transformation to the mobile user (60);
receiving, from the third party (75) via a the packet data
receiving, from the third party (75) via the packet data network, a second key (2b) in connection with a request from the third party to transfer information to the mobile user; and
comparing said first and said second key; and
transmitting, if a match is found in said comparing step, information received from the third party to the mobile user free of charge for the mobile user.

2. The method as claimed in claim 1, wherein said step of receiving a first key (2a) includes receiving a measure of the amount of information for which a transfer right has been acquired by way of pre-payment at the e-commerce site.

3. The method as claimed in claim 2, wherein said measure denotes a certain number of data bytes, or data packets, or a certain amount of transferring time, at disposal in said transmitting step.

4. The method as claimed in claim 1, wherein the amount of information transmitted in the transmitting step is measured, including the additional step of transmitting a message to said e-commerce site indicating an amount of money to charge the third party.

5. The method as claimed in any one of claims 1 - 4, wherein the information of said transmitting step is transmitted to the mobile user (60) as packet data.

6. The method as claimed in claim 5, wherein the mobile user (60) is a GPRS or UMTS subscriber.

7. The method as claimed in any one of claims 1 - 6, wherein the transmitting step is performed by using the Wireless Application Protocol.

8. The method as claimed in any one of claims 1 - 6, wherein the information relates to IP telephony originating from said third party (75) and terminating at a wireless terminal of said mobile user (60).

9. The method as claimed in any one of claims 1 - 8, wherein the transmitting step uses a Short Message Service for transmitting the information.

10. The method as claimed in any one of claims 1 - 9, wherein said first key and said second key are symmetrical keys.

11. The method as claimed in any one of claims 1 - 10, wherein said first key (2a) and said second key (2b) are a pair of asymmetrical keys, said first key being a private key and said second key being a public key.

12. A method as claimed in any of the preceding claims, wherein the method includes the steps of :
accepting, at the e-commerce site server, a request from the third party to use a payment service when transferring information to the mobile user in the wireless communication network (40)
generating, at the e-commerce server (20) a pair of matching keys consisting of a said first key and said second key;
transmitting, from the e-commerce server, said first key to the gateway node (10) and the second key to said third party;

13. The method as claimed in claim 12, wherein said step of transmitting said first key (2a) includes transmitting a measure of the amount of information for which a transfer right has been acquired by way of pre-payment at the e-commerce site.

14. A system for transferring of information to a mobile user (60) in a wireless communication network (40) free of charge for the mobile user, said information originating from a third party (75) via a packet data network (30) such as the Internet, said system including a gateway node (10) operatively connected to the packet data network and to the wireless communication network, **characterized in that** said gateway node includes :
first receiving means for receiving, from an e-commerce site server (20) via the packet data network (30), a first key (2a) indicating that someone has acquired the right to transfer information to the mobile user (60)
second receiving means for receiving, from the third party (75) via the packet data network (30), a second key (2b) in connection with a request from the third party to transfer information to the mobile user; and
comparing means for comparing said first and said second key; and
transmitting means for transmitting, if a match is found by said comparing means, information received from the third party to the mobile user free of charge for the mobile user.

15. The system as claimed in claim 14, wherein said first receiving means is arranged for receiving a measure of the amount of information for which a transfer right has been acquired by way of pre-payment at the e-commerce site.

16. The system as claimed in claim 15, wherein said measure denotes a certain number of data bytes, or data packets, or a certain amount of transferring time, at disposal for said transmitting means.

17. The system as claimed in claim 14, wherein the transmitting means is arranged to measure the amount of information transmitted, and further arranged for transmitting a message to said e-commerce site indicating an amount of money to charge the third party.

18. The system as claimed in any one of claims 14-17, wherein the information transmitted by said transmitting means is transmitted to the mobile user (60) as packet data.

19. The system as claimed in claim 18, wherein the mobile user (60) is a GPRS or UMTS subscriber.

20. The system as claimed in any one of claims 14-19 wherein the transmitting means is arranged to use the Wireless Application Protocol for the transmission.

21. The system as claimed in any one of claims 14-19, wherein the information transmitted by said transmitting means relates to IP telephony originating from said third party (75) and terminating at a wireless terminal of said mobile user (60).

22. The system as claimed in any one of claims 14-21, wherein the transmitting means is arranged to use a Short Message Service for transmitting the information.

23. The system as claimed in any one of claims 14-22, wherein said first key and said second key are symmetrical keys.

24. The system as claimed in any one of claims 14-23. wherein said first key and said second key are a pair of asymmetrical keys, said first key being a private key and said second key being a public key.

25. The system as claimed in any one of claims 14-24, wherein all of said means included by the gateway node (10) are processing and/or interface circuit means of a general purpose computer implementing the gateway node.

26. The system as claimed in any one of claims 14-25, wherein the e-commerce site server (20) includes
accepting means for accepting a request from the third party (75) to use a payment service when transferring information to a mobile user (60) in the wireless communication network (40);
generating means for generating a pair of matching keys consisting of said first key and said second key; and
transmitting means for transmitting said first key (2a) to the gateway node (10) and the second key (2b) to said third party (75).

27. The system as claimed in claim 26, wherein said transmitting means for transmitting a first key (2a) further is arranged for transmitting said measure of the amount of information for which a transfer right has been acquired by way of pre-payment at the e-commerce site.

28. The system as claimed in claims 26 or 27, wherein all of said means included by the e-commerce site server (20) are processing and/or interface circuit means of a general purpose computer implementing the server.

## Patentansprüche

1. Verfahren, das durch einen Gatewayknoten (10) zum Übertragen von Information zu einem mobilen Benutzer (60) in einem drahtlosen Kommunikationsnetz (40), kostenlos für den mobilen Benutzer, implementiert ist, welche Information von einer dritten Partei (75) über ein Paketdatennetz (30) stammt, wie z. B. dem Internet, welcher Gatewayknoten betriebsmäßig mit dem Paketdatennetz und dem drahtlosen Kommunikationsnetz verbunden ist, **gekennzeichnet durch** die Schritte:
von einem E-Commerce-Site-Server (20) über das Paketdatennetz (30) einen ersten Schlüssel (2a) zu empfangen, der anzeigt, dass jemand das Recht erworben hat, Information zum mobilen Benutzer (60) zu übertragen;
von der dritten Partei (75) über das Paketdatennetz einen zweiten Schlüssel (2b) in Verbindung mit einer Anforderung von der dritten Partei zu empfangen, Information zum mobilen Benutzer zu übertragen ; und
den ersten und zweiten Schlüssel zu vergleichen; und
wenn Zusammenpassen in dem Vergleichsschritt gefunden wird, Information, die von der dritten Partei empfangen worden ist, kostenlos für den mobilen Benutzer zum mobilen Benutzer zu übertragen.

2. Verfahren nach Anspruch 1, bei dem der Schritt, einen ersten Schlüssel (2a) zu empfangen, es einschließt,
ein Ausmaß der Menge von Information zu empfangen, für die ein Übertragungsrecht durch Vorauszahlung beim E-Commerce-Site erworben worden ist.

3. Verfahren nach Anspruch 2 , bei dem das Ausmaß eine gewisse Anzahl von Datenbytes oder Datenpaketen oder eine gewisse Menge von Übertragungszeit bezeichnet, die beim Übertragungsschritt zur Verfügung stehen.

4. Verfahren nach Anspruch 1, bei dem die Menge von Information, die im Übertragungsschritt übertragen wird, gemessen wird, des zusätzlichen Schritts, eine Nachricht zu dem E-Commerce-Site zu übertragen, die den Geldbetrag anzeigt, der der dritten Partei belastet werden soll.

5. Verfahren nach einem der Ansprüche 1 - 4, bei dem die Information des Ubertragungsschritts zum mobilen Benutzer (60) als Paketdaten übertragen wird.

6. Verfahren nach Anspruch 5, bei dem der mobile Benutzer (60) ein GPRS- oder UMTS-Teilnehmer ist.

7. Verfahren nach einem der Ansprüche 1 - 6, bei dem der Übertragungsschritt unter Verwendung des Wireless Application Protocol (drahtloses Übertragungsprotokoll) durchgeführt wird.

8. Verfahren nach einem der Ansprüche 1 - 6, bei dem sich die Information auf IP-Telefonie bezieht, die von der dritten Partei (75) ausgeht, und an einem drahtlosen Endgerät des mobilen Benutzers (60) endet.

9. Verfahren nach einem der Ansprüche 1 - 8, bei dem der Übertragungsschritt einen Short Message Service (Dienst kurzer Meldungen) zum Übertragen der Information verwendet

10. Verfahren nach einem der Ansprüche 1 - 9, bei dem der erste Schlüssel und der zweite Schlüssel 11. symmetrische Schlüssel sind.

11. Verfahren nach einem der Ansprüche 1 - 10, bei dem der erste (2a) und der zweite Schlüssel (2b) ein Paar von asymmetrischen Schlüsseln sind, wobei der erste Schlüssel ein privater Schlüssel und der zweite Schlüssel ein öffentlicher Schlüssel ist.

12. Verfahren nach einem der vorangehenden Ansprüche, bei dem das Verfahren die Schritte einschließt:
beim E-Commerce-Site-Server eine Anforderung von der dritten Partei anzunehmen, einen Bezahlungsdienst zu verwenden, wenn Information, zum mobilen Benutzer im drahtlosen Übertragungsnetz (40) übertragen wird;
beim E-Commerce-Server (20) ein Paar von zusammenpassenden Schlüsseln zu erzeugen, die aus dem ersten Schlüssel und dem zweiten Schlüssel bestehen;
von dem E-Commerce-Server den ersten Schlüssel zum Gatewayknoten (10) und den zweiten Schlüssel zu der dritten Partei zu übertragen.

13. Verfahren nach Anspruch 12, bei dem der Schritt, den ersten Schlüssel (2a) zu übertragen, es einschließt, ein Ausmaß der Menge von Information zu übertragen, für die ein Übertragungsrecht durch Vorrauszahlung am E-Commerce-Site erworben worden ist.

14. System zum Übertragen von Information zu einem mobilen Benutzer (60) in einem drahtlosen Kommunikationsnetz (40), kostenlos für den mobilen Benutzer, welche Information von einer dritten Partei (75) über ein Paketdatennetz (30) wie z. B. dem Internet stammt, welches System einen Gatewayknoten (10) einschließt, der betriebsmäßig mit dem Paketdatennetz und dem drahtlosen Kommunikationsnetz verbunden ist, **dadurch gekennzeichnet, dass** der Gatewayknoten einschließt:
erste Empfangsmittel zum Empfangen von einem E-Commerce-Site-Server (20) über das Paketdatennetz (30) eines ersten Schlüssels (2a), der anzeigt, dass jemand das Recht erworben hat, Information zum mobilen Benutzer (60) zu übertragen;
zweite Empfangsmittel zum Empfangen eines zweiten Schlüssels (2b) von der dritten Partei (75) über das Paketdatennetz (30) in Verbindung mit einer Anforderung von der dritten Partei, Information zum mobilen Benutzer zu übertragen;
Vergleichsmittel zum Vergleichen des ersten und des zweiten Schlüssels; und
Übertragungsmittel zum Übertragen, wenn durch die Vergleichsmittel ein Zusammenpassen festgestellt wird, von Information, die von der dritten Partei empfangen worden ist, zum mobilen Benutzer kostenlos für den mobilen Benutzer.

15. System nach Anspruch 14, bei dem die ersten Empfangsmittel dazu ausgebildet sind, ein Ausmaß der Menge von Information zu empfangen, für die ein Übertragungsrecht durch Vorauszahlung beim E-Commerce-Site erworben worden, ist.

16. System nach Anspruch 15, bei dem das Ausmaß eine gewisse Anzahl von Datenbytes oder Datenpakets oder eine gewisse Menge von Übertragungszeit bezeichnet,die für die Übertragungsmittel zur Verfügung stehen.

17. System nach Anspruch 14, bei dem die Übertragungsmittel dazu ausgebildet sind, die Menge von Information zu messen, die übertragen wird, und weiter dazu ausgebildet sind, eine Meldung zu dem E-Commerce-Site zu übertragen, die einen Geldbetrag anzeigt, der der dritten Partei in Rechnung gestellt werden soll

18. System nach einem der Ansprüche 14 - 17, bei dem die Information, die durch die Übertragungsmittel übertragen wird, zum mobilen Benutzer (60) als Paketdaten übertragen wird.

19. System nach Anspruch 18, bei dem der mobile Benutzer (60) ein GPRS- oder UMTS-Teilnehmer ist.

20. System nach einem der Ansprüche 14 - 19, bei dem die Übertragungsmittel dazu ausgebildet sind, dass Mireless Application Protocol (drahtloses Anwendungsprotokoll) für die Übertragung zu benutzen.

21. System nach einem der Anspruchs 14 -19, bei dem die Information, die durch die Übertragungsmittel übertragen wird, sich auf IP-Telefonie bezieht, die von der dritten Partei (75) ausgeht und an einem drahtlosen Endgerät des mobilen. Benutzers (60) endet.

22. System nach einem der Ansprüche 14 - 21, bei dem die Übertragungsmittel dazu ausgebildet sind, einen Short Message Service (Dienst kurzer Meldungen) zum Übertragen der Information zu verwenden.

23. System nach einem der Ansprüche 14 - 22, bei dem der erste Schlüssel und der zweite Schlüssel symmetrische Schlüssel sind.

24. System nach einem der Ansprüche 14 - 23, bei dem der erste Schlüssel und der zweite Schlüssel ein Paar von asymmetrischen Schlüsseln sind, wobei der erste Schlüssel ein privater Schlüssel und der zweite Schlüssel ein öffentlicher Schlüssel ist.

25. System nach einem der Ansprüche 14 - 24, bei dem alle Mittel, die durch den Gatewayknoten (10) eingeschlossen sind, Verarbeitungsmittel und/oder Schnittstellenschaltungsmittel eines Allzweckcomputers sind, der den Gatewayknoten implementiert.

26. System nach einem der Ansprüche 14 - 25, bei dem der E-Commerce-Site-Server (20) einschließt:
Annahmemittel zum Annehmen einer Anforderung von der dritten Partei (75), einen Bezahlungsdienst zu verwenden, wenn Information zu einem mobilen Benutzer (60) im drahtlosen Kommunikationsnetz (40) übertragen wird;
Erzeugungsmittel zum Erzeugen eines Paar von zusammenpassenden Schlüsseln, das aus dem ersten Schlüssel und dem zweiten Schlüssel besteht; und
Übertragungsmittel zum Übertragen des ersten Schlüssels (2a) zum Gatewayknoten (10) und des zweiten Schlüssel (2b) zur dritten Partei (75).

27. System nach Anspruch 26, bei dem die Übertragungsmittel zum Übertragen eines ersten Schlüssels (2a) weiter dazu ausgebildet sind., das Ausmaß der Informationsmenge zu übertragen, für die ein Ubertragungsrecht durch Vorauszahlung beim E-Commerce-Site erworben worden ist.

28. System nach den Ansprüchen 26 oder 27, bei dem alle Mittel, die durch den E-Commerce-Site-Server (20) eingeschlossen sind, Verarbeitungs- und/oder Schnittstellenschaltungsmittel eines Allzweckcomputers sind, der den Server implernentiert.

## Revendications

1. Procédé mis en oeuvre par un noeud de transit (10) pour le transfert d'informations à un utilisateur mobile (60) dans un réseau de communication sans fil (40) gratuit pour l'utilisateur mobile, les dites informations provenant d'une troisième entité (75) via un réseau de données par paquets (30), tel que le réseau Internet, le dit noeud de transit étant fonctionnellement connecté au réseau de données par paquets et au réseau de communication sans fil,
**caractérisé par** les étapes de :
réception, en provenance d'un serveur de site de commerce électronique (20), via le réseau de données par paquets (30), d'une première clé (2a) indiquant que quelqu'un a acquis le droit de transférer des informations à l'utilisateur mobile (60) ;
réception, en provenance de la troisième entité (75), via le réseau de données par paquets, d'une deuxième clé (2b) en relation avec une demande de la troisième entité pour transférer des informations à l'utilisateur mobile ; et
comparaison des dites première et deuxième clés ; et
transmission, si une concordance est trouvée à la dite étape de comparaison, des informations reçues de la troisième entité à l'utilisateur mobile, gratuitement pour l'utilisateur mobile.

2. Procédé selon la revendication 1, dans lequel la dite étape de réception d'une première clé (2a) comprend la réception d'une mesure de la quantité d'informations pour laquelle un droit de transfert a été acquis au moyen d'un pré-paiement au site de commerce électronique.

3. Procédé selon la revendication 2, dans lequel la dite mesure indique un certain nombre d'octets de données, ou de paquets de données, ou une certaine quantité de temps de transfert, à disposition dans la dite étape de transmission.

4. Procédé selon la revendication 1, dans lequel la quantité d'informations transmise à l'étape de transmission est mesurée, comprenant l'étape additionnelle de transmission d'un message au dit site de commerce électronique indiquant une somme d'argent à facturer à la troisième entité.

5. Procédé selon une quelconque des revendications 1 à 4, dans lequel les informations de la dite étape de transmission sont transmises à l'utilisateur mobile (60) sous forme de données par paquets.

6. Procédé selon la revendication 5, dans lequel l'utilisateur mobile (60) est un abonné GPRS ou UMTS.

7. Procédé selon une quelconque des revendications 1 à 6, dans lequel l'étape de transmission est effectuée par utilisation du Protocole d'Application Sans Fil.

8. Procédé selon une quelconque des revendications 1 à 6, dans lequel les informations concernent la téléphonie sur IP provenant de la dite troisième entité (75) et aboutissant à un terminal sans fil du dit utilisateur mobile (60).

9. Procédé selon une quelconque des revendications 1 à 8, dans lequel l'étape de transmission utilise un service de message court SMS pour transmettre les informations.

10. Procédé selon une quelconque des revendications 1 à 9, dans lequel la dite première clé et la dite deuxième clé sont des clés symétriques.

11. Procédé selon une quelconque des revendications 1 à 10, dans lequel la dite première clé (2a) et la dite deuxième clé (2b) sont une paire de clés asymétriques, la dite première clé étant une clé privée et la dite deuxième clé étant une clé publique.

12. Procédé selon une quelconque des revendications précédentes, qui comprend les étapes de :
acceptation, au serveur du site de commerce électronique, d'une demande de la troisième entité pour utiliser un service de paiement lors du transfert des informations à l'utilisateur mobile dans le réseau de communication sans fil (40),
génération, au serveur de commerce électronique (30), de deux clés concordantes consistant en la dite première clé et la dite deuxième clé ; et
transmission, à partir du serveur de commerce électronique, de la dite première clé au noeud de transit (10) et de la deuxième clé à la dite troisième entité.

13. Procédé selon la revendication 12, dans lequel la dite étape de transmission de la dite première clé (2a) comprend la transmission d'une mesure de la quantité d'informations pour laquelle un droit de transfert a été acquis par pré-paiement au site de commerce électronique.

14. Système pour le transfert d'informations à un utilisateur mobile (60) dans un réseau de communication sans fil (40) gratuitement pour l'utilisateur mobile, les dites informations provenant d'une troisième entité (75) via un réseau de données par paquets (30) tel que le réseau Internet, le dit système comprenant un noeud de transit (10) fonctionnellement connecté au réseau de données par paquets et au réseau de communication sans fil,
**caractérisé en ce que** le dit noeud de transit comprend :
unpremier moyen de réception pour recevoir, en provenance d'un serveur de site de commerce électronique (20) via le réseau de données par paquets (30), une première clé (2a) indiquant que quelqu'un a acquis le droit de transfert des informations à l'utilisateur mobile (60) ;
un deuxième moyen de réception pour recevoir, en provenance de la troisième entité (75) via le réseau de données par paquets (30), une deuxième clé (2b) en relation avec une demande de la troisième entité pour transférer des informations à l'utilisateur mobile, et
un moyen de comparaison pour comparer les dites première et deuxième clés ; et
un moyen de transmission pour transmettre, si une concordance est trouvée par le dit moyen de comparaison, les informations reçues de la troisième entité à l'utilisateur mobile gratuitement pour l'utilisateur mobile.

15. Système selon la revendication 14, dans lequel le dit premier moyen de réception est prévu pour recevoir une mesure de la quantité d'informations pour laquelle un droit de transfert a été acquis par pré-paiement au site de commerce électronique.

16. Système selon la revendication 15, dans lequel la dite mesure indique un certain nombre d'octets de données, ou de paquets de données, ou une certaine quantité de temps de transfert, à disposition pour le dit moyen de transmission.

17. Système selon la revendication 14, dans lequel le moyen de transmission est prévu pour mesurer la quantité d'informations transmises, et en outre agencé pour transmettre un message au dit site de commerce électronique indiquant une somme d'argent à facturer à la troisième entité.

18. Système selon une quelconque des revendications 14 à 17, dans lequel les informations transmises par le dit moyen de transmission sont transmises à l'utilisateur mobile (60) comme données par paquets.

19. Système selon la revendication 18, dans lequel l'utilisateur mobile (60) est un abonné GPRS ou UMTS.

20. Système selon une quelconque des revendications 14 à 19, dans lequel le moyen de transmission est agencé pour utiliser le Protocole d'Application Sans Fil pour la transmission.

21. Système selon une quelconque des revendications 14 à 19, dans lequel les informations transmises par le dit moyen de transmission concernent une téléphonie sur IP provenant de la dite troisième entité (75) et aboutissant à un terminal sans fil du dit utilisateur mobile (60).

22. Système selon une quelconque des revendications 14 à 21, dans lequel le moyen de transmission est prévu pour utiliser un service de message court SMS pour transmettre des informations.

23. Système selon une quelconque des revendications 14 à 22, dans lequel la dite première clé et la dite deuxième clé sont des clés symétriques.

24. Système selon une quelconque des revendications 14 à 23, dans lequel la dite première clé et la dite deuxième clé sont une paire de clés asymétriques, la dite première clé étant une clé privée et la dite deuxième clé étant une clé publique.

25. Système selon une quelconque des revendications 14 à 24, dans lequel tous les dits moyens inclus dans le noeud de transit (10) sont des moyens de circuit de traitement et/ou d'interface d'un ordinateur d'usage général constituant le noeud de transit.

26. Système selon une quelconque des revendications 14 à 25, dans lequel le serveur de site de commerce électronique (20) comprend :
un moyen d'acceptation pour accepter une demande de la troisième entité (75) pour utiliser un service de paiement lors du transfert d'informations à un utilisateur mobile (60) dans le réseau de communication sans fil (40) ;
des moyens de génération pour engendrer deux clés de concordance consistant en une dite première clé et une dite deuxième clé ; et
un moyen de transmission pour transmettre la dite première clé (2a) au noeud de transit (10) et la deuxième clé (2b) à la dite troisième entité (75).

27. Système selon la revendication 26, dans lequel le dit moyen de transmission pour transmettre une première clé (2a) est en outre prévu pour transmettre la dite mesure de la quantité d'informations pour laquelle un droit de transfert a été acquis par pré-paiement au site de commerce électronique.

28. Système selon les revendications 26 ou 27, dans lequel tous les dits moyens inclus par le serveur de site de commerce électronique (20) sont des moyens de circuit de traitement et/ou d'interface d'un ordinateur d'usage général constituant le serveur.
